# EUROPÄISCHE PATENTANMELDUNG

(11) **EP 2 768 184 A1**
(43) Veröffentlichungstag der Anmeldung: **20.08.2014**
(21) Anmeldenummer: 14155434.5
(22) Anmeldetag: 17.02.2014
(51) Int. Cl.: H04L 12/58, H04L 29/06

(54) **Verschlüsselungsverfahren für e-mails**

(30) Priorität: 19.02.2013 DE 102013101611
(71) Anmelder: HvS-Consulting AG, 85748 Garching bei München (DE)
(72) Erfinder: von Stetten, Frank, 81249 München (DE)
(74) Vertreter: Wendels, Stefan

(57) **Zusammenfassung**

Verfahren zur Datenübertragung einer elektronischen Nachricht (N1) über einen ersten Datenkanal (11) von einer Sendeinstanz (12) einer ersten Datenverarbeitungseinrichtung (1) an eine Empfängerinstanz (22) unter Verwendung eines Verschlüsselungsmoduls (30) unter Ausführung der folgenden Schritte:
a) Aufrufen des Verschlüsselungsmoduls (30) und Erzeugen eines Datenschlüssel (S1) zum Verschlüsseln der Nachricht (N1);
b) Auswählen mindestens einer Empfängerkennung (E1) für die Datenübertragung der Nachricht (N1) an die Empfängerinstanz (22);
c) Auswählen mindestens einer Empfängerkennung (E2) einer zweiten Empfängerinstanz (23);
d) Aktivieren eines Übermittlungsoperators (50) zur Übermittlung der verschlüsselten Nachricht (N1) über den ersten Datenkanal (11) an die Empfängerinstanz (22), wobei automatisch der Schlüssel (S1) und die Empfängerkennung (E2) als Nachricht (N2) verschlüsselt werden und über einen zweiten Datenkanal (21, 21') an die zweite Empfängerinstanz (23) übertragen werden.

## Beschreibung

Die Erfindung betrifft ein Verfahren zur sicheren Datenübertragung einer elektronischen Nachricht, insbesondere einer E-Mail-Nachricht und deren Dateianhängen über einen Datenkanal eines Kommunikationsnetzwerks von einer Sendeinstanz zu einer Empfangsinstanz gemäß den Merkmalen von Anspruch 1 sowie eine Vorrichtung zur sicheren Datenübertragung einer elektronischen Nachricht nach Anspruch 13.

Für den Schutz von Inhalten in Textnachrichten, insbesondere briefartigen Textnachrichten wie E-Mails mit Anhängen, bei deren Übertragung die Authentifizierung der entsprechenden Kommunikationspartnern notwendig ist, stehen seit vielen Jahren leistungsfähige technischen Lösungen, wie Verschlüsselungsverfahren bereit.

In der WO-2006/136001-A1 wird zum Beispiel ein Verfahren zum verschlüsselten Versenden von Emails über Mobilfunkgeräte offenbart. Dabei wird die Verwendung einer Verschlüsselung nach einem Public-Key Verfahren, kurz PKI zum kryptografischen Verschlüsseln angegeben. Ein Mobiltelefon kann sich entsprechende öffentliche Schlüssel von E-Mail Empfängern, die in einer Zertifizierungsstelle verifiziert wurden, in einem Speicherbereich des Telefons ablegen. Über einen Internetserver ist es dem Benutzer möglich, entsprechende Zertifikate über die Schlüssel der Empfänger in das Mobiltelefon zu laden. Diese Möglichkeit ist aber sehr umständlich, da der Benutzer die Internetadresse des Servers kennen muss und dann darauf vertrauen muss, dass das gewünschte Zertifikat auch abrufbar ist. Weiterhin ist bei dieser Art von Verschlüsselung eine hohe Interaktivität zwischen dem Benutzer und seinem mobilen Endgerät vorhanden, sodass dieses Verfahren eher umständlich und aufwendig ist.

Im Stand der Technik ist ein weiteres Verfahren aus der DE 102007046102 B4 bekannt. Diese Druckschrift beschäftigt sich mit einem Verfahren zum Schutz vor Veränderung von Daten und zur Authentifizierung des Datensenders bei der Datenübertragung.

Ferner ist im Stand der Technik aus der WO 002010146128 A3 ein Verfahren zur Verschlüsselung einer Verbindung in einem mobilen Kommunikationsnetz bekannt. Das Verfahren umfasst die Generierung eines Schlüssels, der zwischen einer Basis und dem Mobilteil während einer ersten Verbindung vereinbart wird, wobei der Schlüssel einen Index umfasst, der von der Basis während der ersten Verbindung zugewiesen wird und wobei die zu übertragenden Daten zwischen der Basis und dem Mobilteil anhand des dem Schlüssel zugewiesenen Indexes identifiziert und verschlüsselt werden.

Bei den im Stand der Technik bekannten Verschlüsselungsverfahren wird eine Nachricht in einen Geheimtext umgewandelt (Verschlüsselung) und kann umgekehrt der Geheimtext wieder in den Klartext rückgewandelt werden (Entschlüsselung). Oft wird hierbei ein einziger Schlüssel benutzt. Mit Verschlüsselungsverfahren kann z.B. eine email-Nachricht oder ein Passwort verschlüsselt werden. Auf diese Weise kann der Ausgangstext vor unbefugtem Zugriff geschützt werden. Trotz dieser Verschlüsselung kann jedoch ein Dritter versuchen, den verschlüsselten Text zu entziffern oder den Schlüssel bzw. das Passwort abzufangen. Prinzipiell unterscheidet man symmetrische Kryptosysteme und die jüngeren asymmetrischen Kryptosystemen sowie Hybrid-Verfahren.

Bei asymmetrischen Methoden existieren zwei Schlüssel (ein sog. Schlüsselpaar) zum Ver- und Entschlüsseln. Der eine Schlüssel ist in der Regel ein öffentlicher Schlüssel, der für jeden zugänglich ist, und der zweite Schlüssel stellt einen privaten oder individuellen Schlüssel dar, der geheim gehalten werden muss. Der Ausgangstext wird mit dem öffentlichen Schlüssel verschlüsselt und kann aber nur mit dem privaten Schlüssel entschlüsselt werden. Der Verschlüsselungsschlüssel muss dabei nicht geheim gehalten werden, es muss aber sichergestellt werden, dass der öffentliche Schlüssel auch wirklich zu dem Empfänger gehört. Nachteilig an dem asymmetrische Verfahren ist, dass es bei großer Datenmengen langsam ist, weshalb in der Praxis häufig schnellere Hybrid-Verfahren genutzt und eingesetzt werden.

Es ist ferner zu berücksichtigen, dass bei Verfahren zur sicheren Datenübertragung einer elektronischen Nachricht auch die spezielle Systemarchitektur und Softwarekonfiguration des betroffenen Kommunikationsnetzwerkes zu berücksichtigen sind. Häufig bestehen voneinander getrennte Kommunikationsnetzwerke, die zwar über Netzwerkknoten miteinander verbunden sind, deren Administratoren und Hardwarekomponenten aber in unterschiedliche Verantwortungsbereiche fallen. Aus Gründen der unbefriedigenden und aufwendigen Handhabung wird in der Praxis häufig von der Verwendung von verschlüsselten und authentifizierten E-Mails vollständig Abstand genommen, wodurch ein Angreifer nach Belieben den Inhalt von Textnachrichten mitlesen kann.

Ein weiterer Nachteil bei Intranet-Kommunikationssystemen mit mehreren berechtigten Benutzern zum Zugriff auf Nachrichten besteht darin, dass sämtliche Berechtigten mit dem Schlüssel auch sämtliche vertrauliche Informationen einsehen können, die aber nur für einen ausgewählten Adressatenkreis bestimmbar waren.

Ferner soll die Möglichkeit bereitgestellt werden, dass Nachrichten im Hinblick auf den Grad der Vertraulichkeit eingestuft werden können und so Informationen vor dem Versenden abhängig von definierten Vertraulichkeits-Kriterien vom Benutzer bewertet werden können.

Aufgrund der Komplexität werden die diversen Verschlüsselungsverfahren im Alltag nur in einem geringen Umfang genutzt. Die Handhabung ist oftmals nicht nur aufwendig, sondern verlangt teilweise auch ein bestimmtes Maß an Fachwissen. Selbst in Unternehmen bei denen IT-Fachkräfte vorhanden sind, sind die Anwender (Benutzer der Nachrichten- und Emailsysteme) mit den Begriffen wie Public Key, Key Ring, Certificate Authority oder Key Server überfordert oder ist deren Anwendung und Handhabung schlichtweg im Arbeitsalltag zu zeitaufwendig, sobald eine Vielzahl von Nachrichten versendet, abgespeichert, später wieder gefunden und wieder geöffnet werden müssen. Darüber hinaus sind die Zugriffsrechte zu regeln und muss ferner sichergestellt werden, dass das Passwort oder die Schlüssel sicher zum Empfänger gelangen. Gerade bei dem letztgenannten Erfordernis besteht im Stand der Technik ein Bedarf an sicheren und einfachen Lösungen. Eine gebräuchliche aber unsichere Methode besteht darin, die Nachrichten z.B. mit einem ZIP-Verschlüsselungsverfahren zu verschlüsseln und per email an den Adressaten vertraulich zu versenden und dann das unverschlüsselte Passwort kurze Zeit später ebenfalls per email an den Adressaten zu versenden. Werden die vertraulichen Emails unterwegs abgefangen, können sie jederzeit problemlos von mit dem Passwort entschlüsselt werden.

Ausgehend vom Stand der Technik, liegt der vorliegenden Erfindung die Aufgabe zugrunde, vorbesagte Nachteile zu überwinden und das Verschlüsseln und Versenden von Nachrichten einfacher und praxistauglicher zu gestalten. Dabei soll das Verschlüsseln und Versenden sicher und ohne Benutzeraufwand bzw. ohne Detailwissen durchführbar sein.

Diese Aufgabe wird durch die in den nebengeordneten unabhängigen Patentansprüchen beschriebenen Maßnahmen gelöst. Vorteilhafte Ausgestaltungen der Erfindung sind in den jeweils abhängigen Ansprüchen beschrieben.

Der Grundgedanke der vorliegenden Erfindung besteht darin, dass ein Verfahren und eine Vorrichtung zur sicheren Datenübertragung einer elektronischen Nachricht, insbesondere einer E-Mail-Nachricht bereitgestellt wird, bei der die mit einem Passwört verschlüsselte Nachricht über einen ersten Datenkanal eines Kommunikationsnetzwerks an einen Empfänger übertragen wird, während der Schlüssel sowie eine aus einem Adressblock ermittelte Benutzerkennung eines Empfängers (Empfängerkennung) eines vorzugsweise mobilen Empfangsgerätes über einen zweiten Datenkanal eines (zweiten) Kommunikationsnetzwerks beim Senden der Nachricht automatisiert an das vorzugsweise mobile Empfangsgerät übertragen wird. In einer besonderen Ausführungsform erfolgt die spezifische Übermittlung in Abhängigkeit von auswähkbaren Benutzeroptionen.

Erfindungsgemäß wird zur Eingabe der Benutzeroptionen ein Verschlüsselungsmodul verwendet, das besonders bevorzugt aus einem Softwareprogrammprodukt und einer Eingabemaske besteht. Das Softwareprogrammprodukt ist vorzugsweise über die Eingabemaske vom Benutzer konfigurierbar und arbeitet dabei interoperabel mit einem Übermittlungsoperator zusammen, um die verschlüsselte Nachricht und den davon getrennten Schlüssel an bzw. über zwei getrennte Übertragungswege bzw. Datenkanäle zu senden. Mit Vorteil weist das Softwareprogrammprodukt dabei diverse Programmbausteine auf, um die im Folgenden beschriebenen Verfahrensschritte automatisiert bzw. teilautomatisiert abzuarbeiten.

Es wird daher ein Verfahren zur sicheren Datenübertragung einer elektronischen Nachricht, insbesondere einer E-Mail-Nachricht und deren Dateianhängen vorgeschlagen, bei der die verschlüsselte Nachricht über einen ersten Datenkanal (eines ersten Kommunikationsnetzwerks) von einer Sendeinstanz einer Datenverarbeitungseinrichtung an eine Empfängerinstanz übertragen wird und zwar unter Verwendung eines Verschlüsselungsmoduls unter Ausführung der folgenden Verfahrensschritte:
a) Aufrufen des Verschlüsselungsmoduls und Erzeugen eines Datenschlüssel zum Verschlüsseln der Nachricht;
b) Auswählen mindestens einer (ersten) Empfängerkennung für die Datenübertragung der Nachricht an eine erste Empfängerinstanz;
c) Auswählen mindestens einer Empfängerkennung einer zweiten Empfängerinstanz, vorzugsweise einer mobilen Empfängerinstanz;
d) Ausführen d.h. Aktivieren eines Übermittlungsoperators zur Übermittlung der verschlüsselten Nachricht über den ersten Datenkanal an die erste Empfängerinstanz, wobei automatisch der Schlüssel und die zweite Empfängerkennung mit einem Schlüssel verschlüsselt werden und über einen zweiten Datenkanal an die zweite Empfängerinstanz automatisiert übertragen werden.

Anders ausgedrückt erfolgt zunächst das Aufrufen des Verschlüsselungsmoduls. Durch bsp. Drücken eines Eingabeknopfes zur Verschlüsselung der Nachricht wird vor dem Senden der E-Mail eine Eingabemaske auf einem Eingabegerät erzeugt. Diese Eingabemaske kann mit Vorteil die Benutzeroptionen in einem Eingabefeld anzeigen, wobei diese in einer vorteilhaften Ausführungsform der Erfindung vom Benutzer manuell verändert werden können. Ein automatischer Passwortgenerator hat bereits ein Zufallspasswort generiert und eingetragen. Mit Vorteil zeigt die Eingabeeinrichtung das automatisch generierte Passwort an. Dieses kann vom Benutzer auf Wunsch manuell geändert werden. In der Eingabemaske wird die Verknüpfung des Softwareprogrammproduktes mit dem zweiten Datenkanal zur automatisierten Versendung des Passwortes angezeigt, um auf diese Weise den gesicherten Versand des Passwortes über einen getrennten Kommunikationsweg zu konfigurieren, sobald die verschlüsselte Nachricht bei Aktivieren des Übermittlungsoperators versendet wird.

Das Verfahren umfasst daher mit Vorteil den Schritt, dass beim Aufrufen des Verschlüsselungsmoduls eine Eingabemaske mit einem oder mehreren Eingabefeldern auf einem Eingabegerät der Datenverarbeitungseinrichtung angezeigt wird.

Besonders vorteilhaft ist es, wenn beim Versenden der (Email)-Nachricht automatisch der Schlüssel mit Hilfe der spezifischen Benutzerkennung des Benutzers der Datenverarbeitungseinrichtung sowie einem individuellen Programmcode mit einem Standardverschlüsselungsverfahren verschlüsselt und in einer Datei in der Datenverarbeitungseinrichtung abgelegt wird. Durch den spezifischen Aufbau der Verschlüsselung in einen Benutzeranteil und einen programmcodebasierenden Anteil ist ausschließlich der Benutzer in der Lage, sich jederzeit das Passwort bzw. den Schlüssel anzeigen zu lassen. Das Verschlüsselungsmodul legt automatisch eine Datei an und übernimmt die Verschlüsselung. Der Schlüssel wird durch das Verschlüsselungsmodul mit Hilfe der Benutzerkennung bei Bedarf errechnet.

In einer besonders vorteilhaften Ausführungsvorm der Erfindung wird bei Übermittlung des Schlüssel, der im Folgenden als Datenschlüssel der Nachricht bezeichnet wird, dieser Schlüssel mit dem weiteren Schlüssel zusammen mit der zweiten Empfängerkennung verschlüsselt. Diese so verschlüsselte Nachricht wird zu einem Server des zweiten Kommunikationssystems übertragen. Dieser Server verfügt über ein Entschlüsselungsmodul und kann die Nachricht mit dem Datenschlüssel und der Empfängerkennung mit einem dort hinterlegten privaten Schlüssel entschlüsseln.

Der zweite Datenkanal ist ein vom ersten Datenkanal getrennter Übertragungsweg zu einer eigenen Empfängerinstanz . Ein beispielhafter Weg des zweiten Datenkanals besteht in einer drahtgebundenen Übermittlungsstrecke vom Übermittlungsoperators der Datenverarbeitungseinrichtung zu einem Server und dann zu einem SMS Provider, welcher den Datenschlüssel über eine drahtlose Übertragungsstrecke zu einer mobilen Empfängerinstanz überträgt. Mit Vorteil ist diese ein Mobilfunkendgerät, wie z.B. ein Handy oder ein Smartphone.

Bevorzugt stellt die Empfängerkennung eine der Empfängerinstanz der zweiten Übertragungsstrecke zugeordnete Mobilfunkrufnummer in dem zweiten Kommunikationsnetzwerk dar. Weiter bevorzugt wird die zweite Empfängerkennung automatisiert aus einem Adressdatenspeicher oder einem Adressblock in Abhängigkeit von der ersten Empfängerkennung ausgelesen. Es können auch mehrere Empfängerkennungen für die erste Übertragungsstrecke (erster Datenkanal) und mehrere Empfängerkennungen für die zweite Übertragungsstrecke (zweiter Datenkanal) in dem Adressblock hinterlegt sein, so dass der Benutzer vor der Datenübertragung über die Eingabemaske ein oder mehrere der Empfängerkennungen auswählen kann. Alternativ kann die Eingabemaske ein Feld zur Verfügung stellen, in die eine Empfängerkennung manuell eingegeben wird; insbesondere für die Fälle in denen aus dem Adressblock keine Empfängerkennung ausgelesen werden kann. Die Empfängerkennung für die zweite Empfangsinstanz kann z.B. eine Mobilfunkrufnummer sein, die bei Auswahl der ersten Empfängerkennung, welches eine Email-Adresse sein kann, in ein Eingabefeld aus einem Adressregister automatisiert ausgelesen wird und dort vorzugsweise zur Verifikation erscheint.

Bei der Übertragung des Datenschlüssel und der Empfängerkennung, wie z.B. der Mobilfunkrufnummer an einen Server des zweiten Kommunikationsnetzwerks werden diese verschlüsselt übertragen, vorzugsweise mit Hilfe eines asymmetrischen Verschlüsselungsverfahrens.

Bevorzugt entschlüsselt der Server diese Daten und überträgt die den Datenschlüssel und die Mobilfunkrufnummer mittels zertifikatsbasierter TLS-Verschlüsselung an einen SMS Provider, wobei zur Sicherung der Datenübertragung die Verbindung zum SMS Provider TLS-verschlüsselt (TLS = Transport Layer Security) ist.

Mit Vorteil versendet der SMS-Provider den entschlüsselten Datenschlüssel an die Mobilfunkrufnummer als SMS und zwar an die zweite Empfängerinstanz.

Erfindungsgemäß wird ferner eine Datenübertragungseinrichtung zum sicheren Übertragen von elektronischen Nachrichten in Kommunikationsnetzwerken bereitgestellt, wobei die Datenübertragungseinrichtung zum Ausführen des zuvor beschriebenen erfindungsgemäßen Verfahrens geeignet ausgebildet ist.

Die erfindungsgemäße Datenübertragungseinrichtung weist wenigstens eine Sendeinstanz, ein Eingabegerät, eine auf der Datenübertragungseinrichtung ausführbare Verschlüsselungssoftware und ein vorzugsweise konfigurierbares Verschlüsselungsmodul auf.

Bevorzugt ist die Datenübertragungseinrichtung so auszubilden, dass das Verschlüsselungsmodul ferner Mittel aufweist, die in Abhängigkeit der ausgewählten Empfängerkennung eine dazu korrespondierende zweite Empfängerkennung aus einem Adressblock auslesen und den Datenschlüssel sowie die zweite Empfängerkennung automatisch zu einem getrennten Datenkanal senden, während die mit dem Datenschlüssel verschlüsselten Nachricht zu einem ersten Datenkanal des ersten Kommunikationsnetzwerkes gesendet wird.

In einer bevorzugten Ausführungsform weist die Datenübertragungseinrichtung ein Verschlüsselungsmodul mit folgenden Komponenten auf:
a) Mittel zum Auswählen mindestens einer in einem Adressblock gespeicherten Empfängerkennung einer ersten Empfängerinstanz;
b) Mittel zum Auswählen mindestens einer in einem Adressblock gespeicherten zweiten Empfängerkennung einer zweiten Empfängerinstanz;
c) einen Übermittlungsoperator zum automatisierten Senden der verschlüsselten Nachricht zu einem ersten mit der ersten Empfängerinstanz in Verbindung stehenden Datenkanal, wobei der Übermittlungsoperator so beschaffen ist, dass beim Ausführen automatisiert der Datenschlüssels und die zweite Empfängerkennung an einen zweiten (separaten) Datenkanal gesendet wird, die mit der zweiten Empfängerinstanz verbunden ist.

Es gibt weitere Möglichkeiten die Lehre der vorliegenden Erfindung in vorteilhafter Weise auszugestalten und weiterzubilden. Dazu ist einerseits auf die in den unabhängigen Ansprüchen nachgeordneten Ansprüche verwiesen sowie auf die anschließenden Erläuterungen bevorzugter Ausführungsformen der Erfindung. In Verbindung mit der Erläuterung der bevorzugten Ausführungsformen der Erfindung anhand der Zeichnungen werden auch im Allgemeinen bevorzugte Ausgestaltungen und Weiterbildungen erläutert. In den Zeichnungen zeigt:
- Fig. 1: eine schematische Ansicht einer erfindungsgemäßen Datenübertragungseinrichtung;
- Fig. 2: ein schematisches Ablaufdiagramm des erfindungsgemäßen Verfahrens.

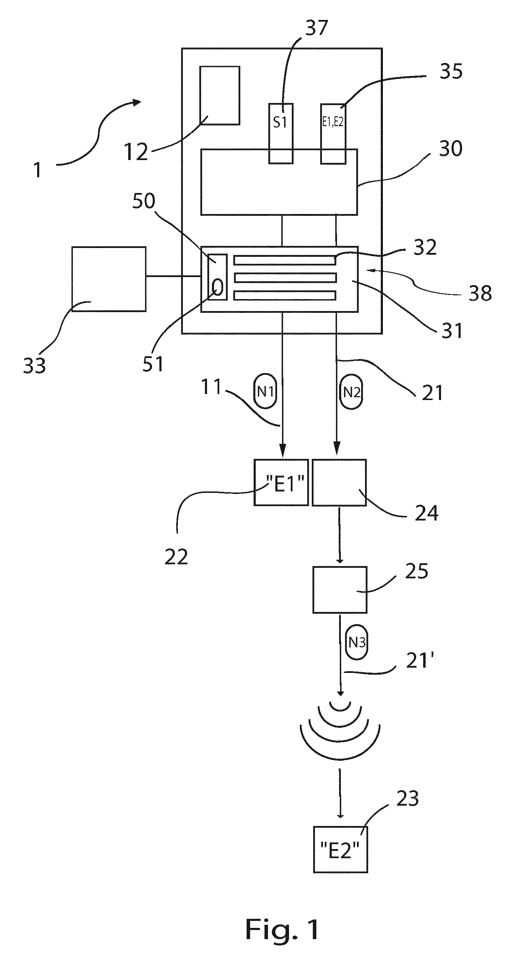

In Fig. 1 ist eine schematische Ansicht einer erfindungsgemäßen Datenübertrag ungseinrichtung (1) gezeigt. Die Datenübertragungseinrichtung (1) ist mit der einer Empfängerinstanz (22) über einen ersten Übertragungsweg (11) - im Folgenden auch Datenkanal (11) genannt- verbunden und kann damit Nachrichten (N1) an die Empfängerinstanz (22) übermitteln. Ferner weist die Datenübertragungseinrichtung (1) ein Verschlüsselungsmodul (30) auf, das unter anderem die Nachrichten (N1) verschlüsselt und an die Empfängerinstanz (22) übermitteln kann. Die Empfängerinstanz (22) ist über eine Empfängerkennung (E1) identifizierbar. Die eine oder mehrere Empfängerkennungen (E1) werden in einem Adressblock (35) gespeichert abgelegt und können von dem Softwareprogrammprodukt des Verschlüsselungsmoduls (30) ausgelesen werden.

Das Verschlüsselungsmoduls (30) stellt ferner eine Eingabemaske (31) mit einem oder mehreren Eingabefeldern (32) bereit, die mittels eines Eingabegerätes (33) vom Benutzer konfigurierbar sind. So kann zunächst durch Drücken eines vom Verschlüsselungsmodul (30) bereitgestellten "Buttons" die Eingabemaske (31) vorzugsweise auf einem Bildschirmanzeigegerät geöffnet und angezeigt werden, jedoch vor der Verschlüsselung und dem Senden der Nachricht (N1). Die Nachricht (N1) ist im vorliegenden Beispiel eine E-Mail-Nachricht (N1). Das Verschlüsselungsmodul (30) umfasst ferner einen automatischen Passwortgenerator (37), der ein Zufallspasswort d.h. Schlüssel (S1) generiert und in einem der Eingabefelder (32) anzeigt. Dieser Schlüssel (S1) der den Datenschlüssel (S1) zum Verschlüsseln der Nachricht (N1) bildet, kann vom Benutzer auch manuell im entsprechenden Eingabefeld (32) konfiguriert werden. Das Verschlüsselungsmodul (30) stellt in der Eingabemaske (31) ferner ein Optionsfeld bereit in dem der Benutzer durch Auswahl den automatischen gesicherten Versand des Schlüssels (S1) über einen zweiten Kommunikationsweg (Datenkanal) (21, 21') konfigurieren kann. Im einfachsten Fall geschieht dies durch Auswählen einer Programmoption.

In Fig. 1 ist ferner ersichtlich, dass der zweite Datenkanal (21) über einen Server (24) verläuft und eine drahtlose Funkstrecke (21') umfasst. Der zweite Datenkanal (21) verbindet die Datenübertragungseinrichtung (1) mit der mobilen Empfängerinstanz (23). Im vorliegenden Beispiel ist die Empfängerinstanz (23) ein Handy oder ein Smartphone. Die Datenverarbeitungs- und Empfangsgeräte, die über den ersten Datenkanal (11) miteinander verbunden sind bilden ein erstes Kommunikationsnetzwerk, während die Datenverarbeitungs- und Empfangsgeräte, die über den zweiten Datenkanal (21, 21') miteinander verbunden ein zweites Kommunikationsnetzwerk bilden. Beide Kommunikationsnetzwerke sind über das Verschlüsselungsmodul (30) ansprechbar.

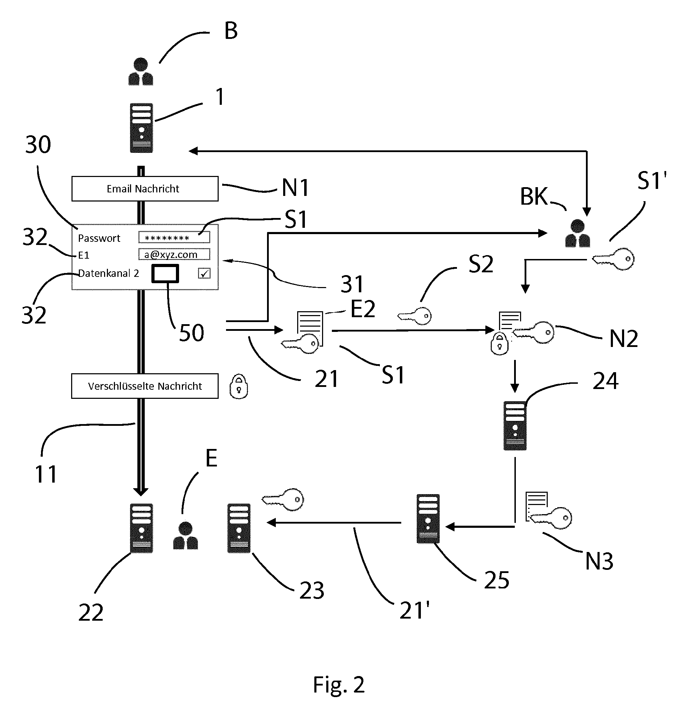

In Fig. 2 ist ein schematisches Ablaufdiagramm des erfindungsgemäßen Verfahrens gezeigt. Gleiche Bezugszeichen in den Figuren weisen auf gleiche funktionale Komponenten hin, so dass zur Vermeidung von Wiederholungen auf die entsprechende Beschreibung zu der Fig. 1 verwiesen wird.

In Fig. 2 ist eine einem Benutzer (B) zugeordnete Datenübertragungseinrichtung (1) gezeigt. Der Benutzer (B) möchte eine vertrauliche Nachricht (N1) an die Empfängerinstanz (22) des Empfängers (E) mit der Empfängerkennung (E1) senden. Im vorliegenden Fall ist Empfängerkennung (E1) die email-Adresse des Empfängers (E). Zunächst wird mittels eines Verschlüsselungsmoduls (30) durch Drücken eines "Buttons" die Eingabemaske (31) auf dem Bildschirmanzeigegerät (38) angezeigt. Im obersten Eingabefeld (32) wird ein Schlüssel (S1) angezeigt, der von dem automatischen Passwortgenerator (37) erzeugt wurde. Im mittleren Eingabefeld (32) wird die Empfängerkennung (E1) des Empfängers (E) angezeigt. Im unteren Eingabefeld (32) ist die Option zur Übermittlung der Nachricht (N1) für den zweiten Datenkanal (21,21') aktiviert.

Ferner ist ein Übermittlungsoperator (50) vorgesehen, der durch Drücken einer Taste (51) aktiviert werden kann. Sobald der Übermittlungsoperator (50) aktiviert wird, wird der Datenschlüssel (S1) mit Hilfe der Benutzerkennung des Benutzers (B) und einem individuellen Programmcode mit einem Standard Verschlüsselungsverfahren verschlüsselt (S1') und in einer Datei in der Datenübertragungseinrichtung (1) abgelegt, die nur für den Benutzer (B) zugänglich ist.

Durch die besondere Zusammensetzung der Verschlüsselung ist ausschließlich der Benutzer (B) in der Lage, sich jederzeit über einen Menüpunkt in der gesendeten E-Mail den Datenschlüssel (S1) d.h. das Passwort anzeigen zu lassen. Ein Softwaretool legt automatisch eine Datei an und übernimmt dabei die Verschlüsselung. Der Schlüssel (S1) wird durch das Softwaretool mit Hilfe der Benutzerkennung des Benutzers (B) bei Bedarf errechnet.

Es wird ferner die Empfängerkennung (E2) des Empfängers (E), hier seine zugehörigen Mobilfunknummern (E2) aus dem Adressblock (35) ausgelesen. Bei mehreren Empfängerkennung (E2) des gleichen Empfängers (E) kann der Benutzer (B) eine gewünschte Auswahl vornehmen. Alternativ kann der Benutzer (B) auch manuell eine andere Empfängerkennung (E2) z.B. eine neue Mobilfunknummer (E2) in die Eingabemaske (31) des Verschlüsselungsmodul (30) eingeben.

Sobald der Übermittlungsoperator (50) aktiviert wird, werden ferner automatisiert folgende Schritte durchgeführt. Die Mobilfunknummer (E2) und der gespeicherte Datenschlüssel (S1) werden dann mit Hilfe einer assymmetrischer Verschlüsselung wiederum mit einem Schlüssel (S2) zusammen als Nachricht (N2) verschlüsselt. Beim Aktivieren des Übermittlungsoperatores (50) zum Senden der verschlüsselten Nachricht (N1) zu einem ersten Datenkanal (11) an eine Empfängerinstanz (22) eines Empfängers (E) wird gleichzeitig automatisiert der Datenschlüssels (S1) und die Empfängerkennung (E2) über einen zweiten Datenkanal (21,21') an eine Empfängerinstanz (23) des Empfängers (E) übermittelt.

In Fig. 2 ist ferner ersichtlich, dass beim dem vorliegenden Ausführungsbeispiel des erfindungsgemäßen Verfahrens die Nachricht (N2) über den Datenkanal (21) zu einem Server (24) übertragen wird. Der Server (24) entschlüsselt die Nachricht (N2) mit einem privaten Schlüssel und generiert eine unverschlüsselte Nachricht (N3), die den Schlüssel (S1) enthält und überträgt diese an einen SMS Provider (25). Zur Sicherung der Kommunikation ist die Verbindung zum SMS Provider (25) ebenfalls mittels zertifikatsbasiertem TLS verschlüsselt (TLS = Transport Layer Security).

Der SMS Provider (25) sendet die Nachricht (N3) mittels einer SMS mit dem entschlüsselten Passwort an die Empfängerinstant (23) über die Mobilfunknummer (E2) und zwar über die Funkstrecke (21') des zweiten Datenkanals (21, 21').

## Patentansprüche

1. Verfahren zur Datenübertragung einer elektronischen Nachricht (N1) über einen ersten Datenkanal (11) von einer Sendeinstanz (12) einer ersten Datenverarbeitungseinrichtung (1) an eine Empfängerinstanz (22) unter Verwendung eines Verschlüsselungsmoduls (30) unter Ausführung der folgenden Schritte:
a) Aufrufen des Verschlüsselungsmoduls (30) und Erzeugen eines Datenschlüssel (S1) zum Verschlüsseln der Nachricht (N1);
b) Auswählen mindestens einer Empfängerkennung (E1) für die Datenübertragung der Nachricht (N1) an die Empfängerinstanz (22);
c) Auswählen mindestens einer Empfängerkennung (E2) einer zweiten Empfängerinstanz (23);
d) Aktivieren eines Übermittlungsoperators (50) zur Übermittlung der verschlüsselten Nachricht (N1) über den ersten Datenkanal (11) an die Empfängerinstanz (22), wobei automatisch der Schlüssel (S1) und die Empfängerkennung (E2) als Nachricht (N2) verschlüsselt werden und über einen zweiten Datenkanal (21, 21') an die zweite Empfängerinstanz (23) übertragen werden und wobei beim Aktivieren des Übermittlungsoperators (50) automatisch der Schlüssel (S1) mit Hilfe der Benutzerkennung (BK) und einem individuellen Programmcode verschlüsselt wird.

2. Verfahren nach Anspruch 1, **dadurch gekennzeichnet, dass** das Verschlüsselungsmodul (30) vom Benutzer (B) über ein Eingabegerät (33) konfigurierbar ist und mit einer Verschlüsselungssoftware interoperabel verbunden ist.

3. Verfahren nach einem der Ansprüche 1 bis 2, **dadurch gekennzeichnet, dass** bei der Übermittlung der verschlüsselten Nachricht (N2) über den zweiten Datenkanal (21,21') an die Empfängerinstanz (23) die Nachricht an einen Server (24) übertragen wird und dort mit einem privaten Schlüssel entschlüsselt wird.

4. Verfahren nach wenigstens einem der Ansprüche 1 bis 3, **dadurch gekennzeichnet, dass** der zweite Datenkanal (21,21') ein vom ersten Datenkanal (11) getrennter Kanal ist und die Empfängerinstanz (23) ein Mobilfunkendgerät darstellt.

5. Verfahren nach wenigstens einem der Ansprüche 1 bis 4, **dadurch gekennzeichnet, dass** die Empfängerkennung (E2) eine Mobilfunknummer darstellt.

6. Verfahren nach wenigstens einem der Ansprüche 1 bis 5, **dadurch gekennzeichnet, dass** beim Aufrufen des Verschlüsselungsmoduls (30) eine Eingabemaske (31) mit wenigstens einem Eingabefeld (32) auf einem Eingabegerät (33) der Datenverarbeitungseinrichtung (1) angezeigt wird.

7. Verfahren nach Anspruch 6, **dadurch gekennzeichnet, dass** bei Auswahl der Empfängerkennung (E1) in einem Eingabefeld (32) die Empfängerkennung (E2) aus einem Adressregister (35) automatisiert ausgelesen wird.

8. Verfahren nach einem oder mehreren der Ansprüche 3 bis 7, **dadurch gekennzeichnet, dass** der Server (24) die entschlüsselte Nachricht (N2) mittels zertifikatsbasierter TLS-Verschlüsselung an einen SMS Provider (25) übermittelt, wobei zur Sicherung der Datenübertragung die Verbindung zum SMS Provider TLS-verschlüsselt (TLS = Transport Layer Security) ist.

9. Verfahren nach Anspruch 8, **dadurch gekennzeichnet, dass** der SMS-Provider (25) die unverschlüsselte Nachricht (N2) als SMS mit dem Schlüssel (S1) an die Empfängerinstanz (23) überträgt.

10. Datenübertragungseinrichtung (1) zum Übertragen von elektronischen Nachrichten (N1) in einem Kommunikationsnetzwerkes (11), wobei die Datenübertragungseinrichtung. zum Ausführen des Verfahrens nach einem der Ansprüche 1 bis 9 ausgebildet ist.

11. Datenübertragungseinrichtung (1) nach Anspruch 10, wobei die Datenübertragungseinrichtung ferner wenigstens eine Sendeinstanz (12), ein Eingabegerät (33), eine auf der Datenübertragungseinrichtung ausführbare Verschlüsselungssoftware und ein Verschlüsselungsmodul (30) aufweist.

12. Datenübertragungseinrichtung (1) nach Anspruch 10 oder 11, wobei das Verschlüsselungsmodul (30) ferner Mittel aufweist, die in Abhängigkeit der ausgewählten Empfängerkennung (E1) eine dazu korrespondierende Empfängerkennung (E2) aus einem Adressblock (35) auslesen und den Datenschlüssel (S1) sowie die Empfängerkennung (E2) automatisch zu einem Datenkanal (21, 21') senden, während die mit dem Datenschlüssel (S1) verschlüsselten Nachricht (N1) zu einem vom Datenkanal (21, 21') getrennten Datenkanal (11) gesendet wird.

13. Datenübertragungseinrichtung (1) nach einem der Ansprüche 10 bis 12, **dadurch gekennzeichnet, dass** das Verschlüsselungsmodul (30) folgendes aufweist:
a) Mittel (32, 33) zum Auswählen mindestens einer in einem Adressblock (35) gespeicherten Empfängerkennung (E1) einer Empfängerinstanz (22) in einem ersten Kommunikationsnetzwerk (20);
b) Mittel (32, 33) zum Auswählen mindestens einer in einem Adressblock (35) gespeicherten Empfängerkennung (E2) einer Empfängerinstanz (23) in einem zweiten Kommunikationsnetzwerk (20);
c) einen Übermittlungsoperator (50) zum automatisierten Senden der verschlüsselten Nachricht (N1) zu einem ersten Datenkanal (11) eines ersten Kommunikationsnetzwerkes (11), wobei der Übermittlungsoperator (50) so ausgebildet ist, dass beim Ausführen der Datenschlüssels (S1) und die Empfängerkennung (E2) automatisiert an einen zweiten Datenkanal (21) eines zweiten Kommunikationsnetzwerkes übermittelt wird.
